Europäisches Patentamt

European Patent Office

Office européen des brevets

(11) Numéro de publication: **0 351 293**
**A1**

## (12) DEMANDE DE BREVET EUROPEEN

(21) Numéro de dépôt: 89401946.2

(22) Date de dépôt: 06.07.89

(51) Int. Cl.⁵: **F 16 B 37/04**
**H 02 B 1/04**

(30) Priorité: 11.07.88 FR 8809399

(43) Date de publication de la demande:
17.01.90 Bulletin 90/03

(84) Etats contractants désignés: DE ES GB IT SE

(71) Demandeur: SOURIAU ET CIE
9-13, rue du Général Galliéni
F-92103 Boulogne-Billancourt (FR)

(72) Inventeur: Sangleboeuf, Patrick
32, Avenue du Maréchal Lyautet
F-72000 Le Mans (FR)

(74) Mandataire: Fort, Jacques
CABINET PLASSERAUD 84, rue d'Amsterdam
F-75009 Paris (FR)

(54) Attache de blocage d'empilement de modules sur un rail de réception.

(57) L'attache est utilisable pour bloquer un empilement de modules adjacents enfilés sur un rail de réception ayant une section en U présentant des branches à rebords internes. L'attache comprend un corps (18) présentant une partie massive munie de moyens souples à friction destiné à s'appuyer sur la face externe des rebords (14) et au moins une paire de pattes élastiques (22) présentant un épaulement de verrouillage destiné à s'appliquer contre la face interne des rebords, et une bride (20) déplaçable par rapport au corps (18) dans la direction longitudinale des pattes (22) entre une position haute vers laquelle elle est repoussée par un ressort de rappel et dans laquelle elle libère les pattes et une position basse d'encliquetage élastique sur les pattes (22), dans laquelle la bride (20) maintient les pattes suffisamment fléchies vers l'intérieur pour que les épaulement puissent passer entre les rebords (14).

FIG.2

EP 0 351 293 A1

**Description**

### Attache de blocage d'empilement de modules sur un rail de réception

L'invention a pour objet une attache destinée à bloquer, sur un rail de réception ayant une section en U présentant des branches à rebords internes, un empilement de modules adjacents enfilés sur le rail.

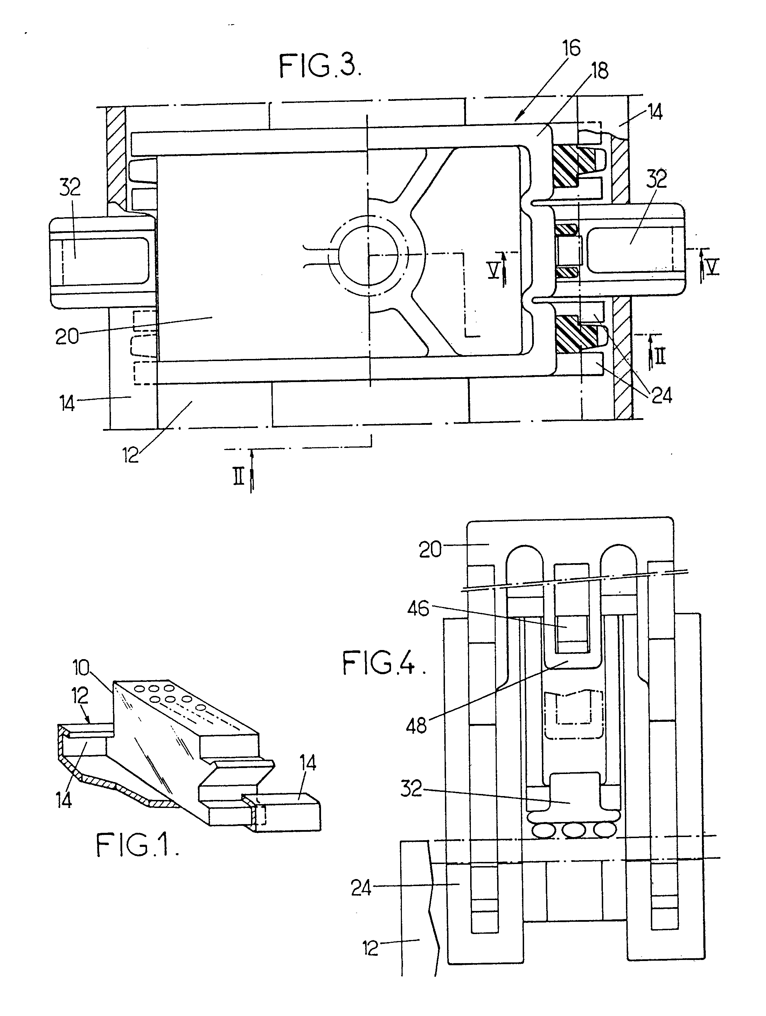

L'invention trouve une application particulièrement importante en aéronautique où on utilise largement des modules de connexion électrique pour constituer des barrettes de composition variable. La Figure 1 montre un exemple de module 10 de connexion enfilé sur un rail 12. Les rebords internes 14 aux extrémités des bras de la section en U du rail 12 retiennent les modules lorsqu'ils sont dans l'orientation montrée en Figure 1. Il est en conséquence impossible à un module appartenant à un empilement de sortir du rail, lorsque les modules sont serrés les uns contre les autres par des attaches fixées sur le rail. Pour enlever un module, on retire une attache terminale, on écarte les modules adjacents à celui qu'on veut enlever et on fait tourner ce dernier d'un quart de tour avant de le retirer.

Les attaches utilisées à l'heure actuelle sont en métal et généralement munies d'une vis de serrage. Un outillage est donc nécessaire pour bloquer ou débloquer l'attache. Elles se montent par insertion, puis rotation d'un quart de tour dans le rail ou en les enfilant à partir de l'extrémité du rail. La mise en place et l'enlèvement sont mal commodes dans les endroits peu accessibles.

L'invention vise à fournir une attache de blocage d'un empilement de modules sur un rail de réception qui soit légère, insérable et enlevable par déplacement perpendiculaire au rail, n'exige aucun outillage de montage ou de démontage, assure un maintien sûr des modules, résiste aux vibrations.

Dans ce but l'invention propose notamment une attache comprenant un corps présentant une partie massive munie de moyens souples à friction destinés à s'appuyer sur le rail et au moins une paire de pattes élastiques présentant un flanc oblique d'introduction dans le rail et un épaulement de verrouillage destiné à être appliqué contre la face interne des rebords par la force d'appui des moyens souples.

Une telle attache est insérable et enlevable par simple déplacement perpendiculaire au rail, à tout emplacement du rail devant lequel il y a un espace libre au moins égal à la profondeur de l'attache.

Dans un mode particulier de réalisation, lesdits moyens sont prévus pour s'appuyer sur la face externe des rebords et l'attache comprend également une bride déplaçable par rapport au corps dans la direction longitudinale des pattes entre une position haute vers laquelle elle est repoussée par un ressort de rappel et dans laquelle elle libère les pattes et une position basse d'encliquetage élastique sur les pattes, dans laquelle la bride maintient les pattes suffisamment fléchies vers l'intérieur pour que les épaulement puissent passer entre les rebords.

Une telle attache peut être fabriquée de façon économique par moulage de matériau plastique résistant aux températures élevées. Le montage s'effectue de façon très simple, éventuellement même à l'aveugle, par simple enfoncement de l'attache de blocage perpendiculairement au rail, la bride étant en position haute. Il n'est pas nécessaire de prévoir un plombage de sécurité, car l'attache n'utilise pas de liaison filetée susceptible de se desserrer.

Pour provoquer la flexion des pattes vers l'intérieur, chaque patte peut porter une came et bride comporte alors des piges coopérant chacune avec l'une des surfaces de came ménagée sur une pattes correspondante et munies chacune d'un cran d'encliquetage sur une saillie de la patte. La surface de came peut être ménagée sur la partie libre de chaque patte, entre deux flancs comportant chacun un desdits épaulements d'appui contre la face inférieure d'un des rebords. Deux paires de pattes peuvent être prévues, disposées de part et d'autre d'oreilles de préhension facilitant la manipulation de l'attache. Dans un mode avantageux de réalisation, la bride coiffe le corps et est percée d'un trou central de passage d'un têton solidaire du corps, permettant de chasser ce dernier vers le bas lorsqu'il est encliqueté.

Dans un autre mode de réalisation, les moyens souples sont constitués par un tampon en matériau élastomère fixé au corps et de dimensions telles qu'il est comprimé entre le fond de la section en U du rail et le corps lorsque les épaulements des pattes élastiques sont engagés contre la face interne des rebords.

L'invention sera mieux comprise à la lecture de la description qui suit d'un mode particulier de réalisation de l'invention, donné à titre d'exemple non limitatif. La description se réfère aux dessins qui l'accompagnent, dans lesquels :

- la Figure 1, déjà mentionnée, est une vue en perspective montrant un module auquel est applicable l'invention, enfilé sur un rail de réception ;

- la Figure 2 est une vue d'ensemble d'une attache suivant un mode particulier de réalisation, en demi-élévation et demi-vue en coupe suivant la ligne II-II de la Figure 3 ;

- la Figure 3 montre l'attache de la Figure 2, en demi-vue de dessus et demi-coupe suivant la ligne III-III de la Figure 2 ;

- la Figure 4 est une vue de gauche de la Figure 1 ;

- la Figure 5 est une vue de détail à grande échelle montrant une fraction de l'attache des Figures 2 à 4, en coupe suivant la ligne V-V de la Figure 3 ;

- la Figure 6 montre une attache suivant un autre mode de réalisation de l'invention, en coupe suivant la ligne VI-VI de la figure 7 ;

- la Figure 7 est une vue de dessus de l'attache de la figure 6.

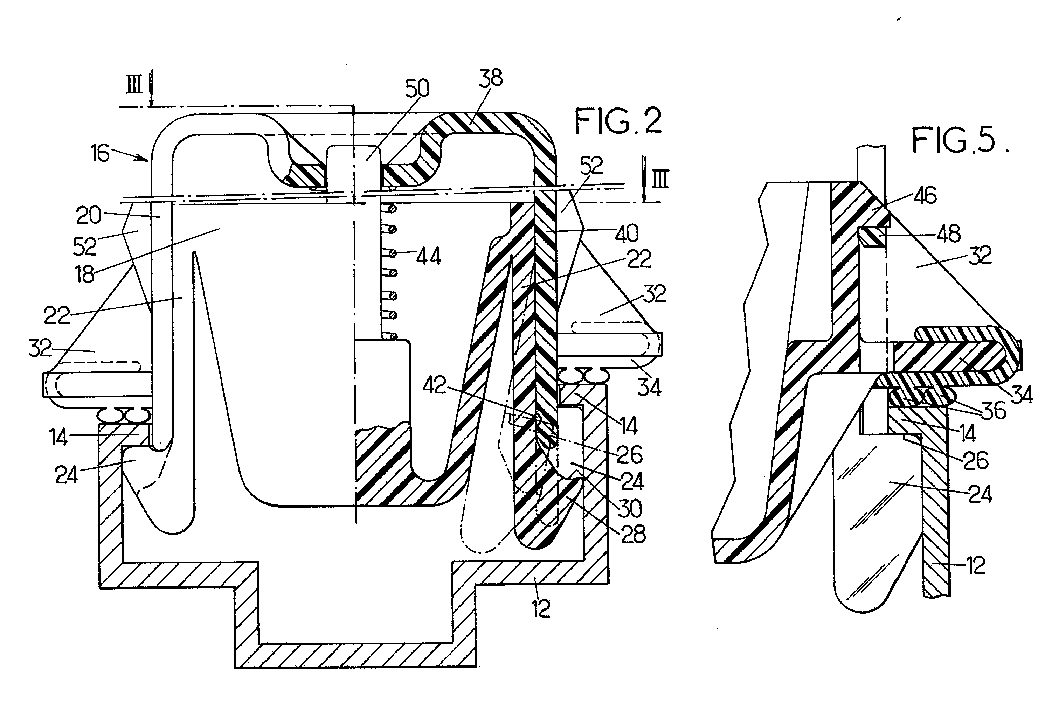

L'attache de blocage 16 montrée sur les Figures 2 à 5 est destinée à bloquer un empilement de modules 10, qui peuvent avoir la forme montrée en Figure 1, sur un rail 12 dont les rebords internes 14 ne sont pas au même niveau, ce qui conduit à une constitution dissymétrique de l'attache. L'attache 16 comporte essentiellement un corps 18 et une bride 20 déplaçables l'un par rapport à l'autre entre une position de verrouillage de l'attache (en traits pleins sur la Figure 2) et une position d'encliquetage de la bride sur le corps (montrée partiellement en traits mixtes sur la Figure 2).

Le corps 18 est d'une seule pièce et avantageusement fabriqué par moulage de matière plastique renforcée par des charges ; il présente une cuvette centrale évasée vers le haut, renforcée par des nervures, et quatre pattes élastiques d'accrochage 22 dont la base est solidaire du bord de la cuvette. Chaque patte 22 présente à son extrémité libre (extrémité basse sur la Figure 2) deux renflements 24 délimités par un épaulement plan 26 d'appui sur la face interne d'un rebord 14. Les faces externes des renflements 24 s'évasent dans le sens d'introduction dans le rail. Ainsi, les pattes fléchissent sous la pression des rebords 14 lorsqu'on enfonce le corps 18 dans le rail et permettent d'insérer l'attache 16. Les deux renflements 24 encadrent une saillie 28 présentant une surface supérieure de came 30 dont le rôle apparaîtra plus loin.

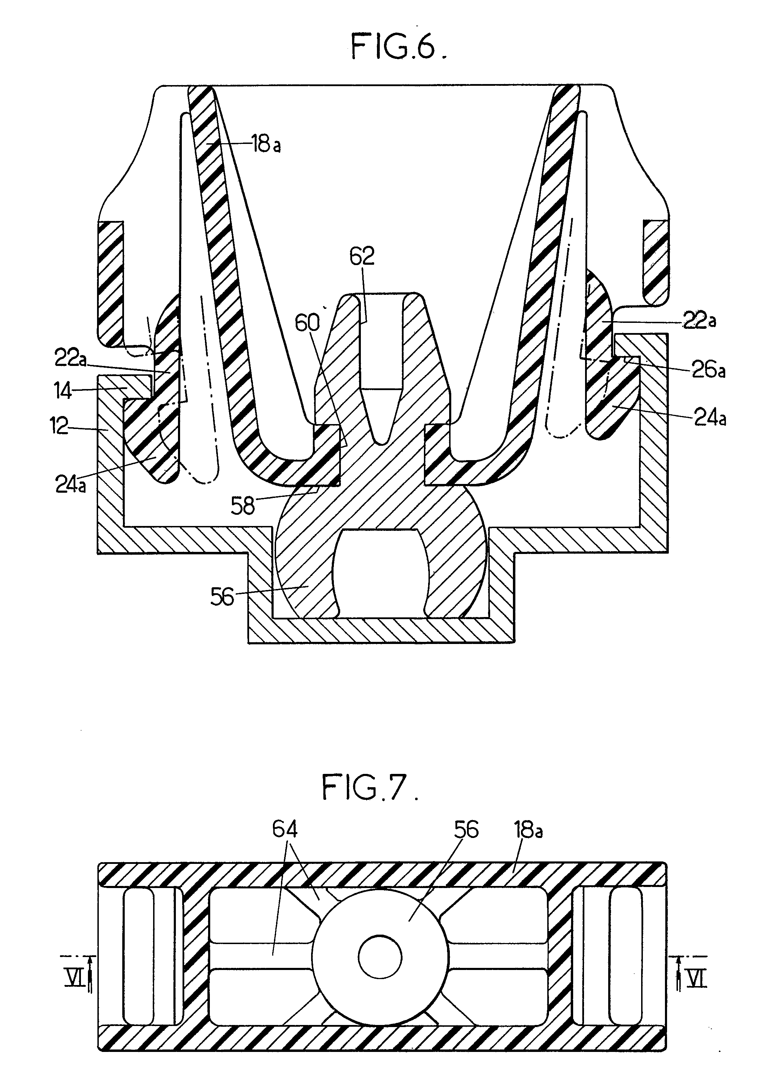

Le corps 18 a deux oreilles centrales 32 de préhension facilitant la manipulation de l'attache. La face inférieure de ces oreilles est plate et recouverte d'un tapis d'adhérence 34, en matériau élastomère, collé sur les oreilles. Les tapis ont des bossages 36 en relief, destinés à s'appliquer contre la face externe des rebords 14 (Figures 2 et 5). L'élastomère constituant le tapis est choisi pour avoir un coefficient de frottement élevé afin d'éviter tout glissement. La flexibilité de l'élastomère amortit les vibrations, évite le relâchement de la pression et compense les tolérances de fabrication. La distance entre l'épaulement 26 et les bossages 36 est prévue en fonction de l'épaisseur des rebords 14.

La bride 20 comporte un fond 38 et quatre piges 40 rigides ; chaque pige peut glisser sur la partie droite d'une patte 22 et fléchir cette patte en s'appuyant sur la surface supérieure de came 30. Lorsque la bride 20 arrive en position basse, un cran 42 de chaque pige 40 s'encliquète sur un bec terminant la rampe supérieure de came 30, comme cela est représenté en traits mixtes à la partie droite de la Figure 2.

Un ressort de rappel 42, comprimé entre la cuvette centrale du corps 18 et le fond 38 de la bride, tend à repousser cette dernière dans la position haute où elle est montrée sur les Figures. Cette position haute est définie par l'appui d'un tenon 46 appartenant au corps contre le fond 48 d'une fenêtre ménagée dans la bride 20. Le tenon 46 est porté par un doigt élastiquement déformable pour permettre de l'engager dans la fenêtre et de l'y emprisonner.

Dans le mode de réalisation illustré, le corps 18 porte un têton central 50 qui fait saillie à travers le fond 38 de la bride. Lorsque la bride est encliquetée sur le corps, le têton 50 déborde du fond 38, ce qui permet de repérer au toucher l'état de l'attache.

Le mode de mise en oeuvre de l'attache ressort directement de la description qui précède.

Avant de monter l'attache, on s'assure que la bride 20 est en position haute par rapport au corps 18. Dans le cas contraire, on enfonce le corps en appuyant sur le têton 50 tout en retenant la bride, par exemple au moyen de saillies 52 prévues à cet effet. L'attache 38 est enfoncée dans le rail en la maintenant à l'aide des oreilles 32 du corps. Au cours de cet enfoncement du corps, les pattes fléchissent vers l'intérieur sous l'action des rebords, grâce à la forme évasée de leur face terminale externe. On appuie sur ce corps pour écraser les bossages du tapis 34 jusqu'à ce que les renflements 24 viennent s'engager sous le rebord 14.

Pour enlever l'attache, on appuie sur la bride 20 pour faire descendre les piges 40 qui, par leur appui sur la surface supérieure de came 30, fléchissent les pattes 22. Lorsque la bride 20 arrive dans sa position extrême, les piges 40 s'encliquètent par leurs crans 42 sur les pattes. Il suffit alors de prendre l'attache par les oreilles 32 et de la retirer du rail 12.

La variante de réalisation de l'invention montrée en figures 6 et 7 se différencie de la précédente par sa plus grande simplicité. L'attache des figures 6 et 7 (où les composants correspondant à ceux des figures 2 à 5 sont désignés par le même numéro de référence, affecté de l'indice a) comporte un corps 18a ayant une partie massive, en matière plastique résistant aux températures élevées, dure et contenant des charges, et deux pattes élastiques 22a présentant un flanc oblique ayant chacune un renflement terminal 24a délimité par un épaulement plan 26a d'appui sur la face interne d'un rebord 14. Les faces externes des renflements 24a présentent un flanc oblique de sorte que les pattes s'évasent vers le haut et peuvent être insérées par simple pression du corps vers le bas, les pattes élastiques fléchissant pendant cette introduction de la position montrée en traits pleins à la position montrée en traits mixtes sur la figure 6.

Des moyens souples à friction sont prévus sur le corps pour s'appuyer sur le fond du rail 12 et pour presser les épaulements 26a contre la face interne des rebords. Dans le mode de réalisation montré en figures 6 et 7, ces moyens sont constitués par un tampon 56 en matériau élastomère fixé dans le fond du corps en forme de U. Pour cela le tampon 56 présente une partie inférieure en forme de boule évidée, terminée par un épaulement radial 58 et un prolongement traversant le fond du U et ayant un rétrécissement local 60 emprisonné dans une ouverture du fond. La boule 56 a une dimension au repos telle qu'elle est comprimée entre le fond de la section en U du rail et le corps lorsque les épaulements 26a des pattes élastiques 18a sont engagés contre la face interne des rebords 14. Le tampon peut être engagé à force dans le corps, en prévoyant dans son prolongement un évidement 62 lui donnant une élasticité suffisante pour se contracter radialement. Il reste ensuite emprisonné de façon définitive.

Comme le corps de l'attache des figures 2 à 5, celui des figures 6 et 7 peut être constitué par moulage de matériau thermo-plastique. Le corps peut comporter, en plus de sa section en U, des nervures de raidissement 64. Le montage de l'attache s'effectue par simple poussée vers le fond du rail. Le démontage s'effectue en pinçant les pattes élastiques pour les dégager des rebords 14, puis en retirant l'attache.

**Revendications**

1. Attache de blocage, sur un rail (12) de réception ayant une section en U présentant des branches à rebords internes (14), d'un empilement de modules enfilés sur le rail, **caractérisée en ce qu**'elle comprend un corps (18) présentant une partie massive munie de moyens souples à friction destiné à s'appuyer sur le rail et au moins une paire de pattes élastiques (22) présentant un flanc oblique d'introduction dans le rail et un épaulement de verrouillage destiné à être appliqué contre la face interne des rebords par la force d'appui des moyens souples.

2. Attache selon la revendication 1, caractérisée en ce que, lesdits moyens étant prévus pour s'appuyer sur la face externe des rebords (14), elle comprend également une bride (20) déplaçable par rapport au corps (18) dans la direction longitudinale des pattes (22) entre une position haute vers laquelle elle est repoussée par un ressort de rappel et dans laquelle elle libère les pattes et une position basse d'encliquetage élastique sur les pattes (22), dans laquelle la bride (20) maintient les pattes suffisamment fléchies vers l'intérieur pour que les épaulements puissent passer entre les rebords (14).

3. Attache selon la revendication 2, caractérisée en ce que la bride comporte des piges (40) coopérant chacune avec une surface de came ménagée sur une patte correspondante (22) et munies chacune d'un cran (42) d'encliquetage sur une saillie (28) de la patte correspondante.

4. Attache selon la revendication 3, caractérisée en ce que la surface de came est ménagée sur la partie libre de chaque patte, entre deux flancs comportant chacun un desdits épaulements (26).

5. Attache selon la revendication 4, caractérisée en ce que deux paires de pattes sont prévues et disposées de part et d'autre d'oreilles (32) de préhension facilitant la manipulation de l'attache.

6. Attache selon la revendication 5, caractérisée en ce que chacune des oreilles de préhension (32) est recouverte d'un tapis d'adhérence (34) en matériau élastomère destiné à prendre appui contre la surface externe des rebords (14).

7. Attache selon l'une quelconque des revendications 2 à 6, caractérisée en ce que la bride (20) coiffe le corps (18) et est percée d'un trou central de passage d'un téton (50) solidaire du corps et permettant de chasser le corps hors de la position d'encliquetage.

8. Attache selon la revendication 1, caractérisé en ce que les moyens souples sont constitués par un tampon en matériau élastomère fixé au corps et de dimension telle qu'il est comprimé entre le fond de la section en U du rail et le corps lorsque les épaulements des pattes élastiques sont engagés contre la face interne des rebords.

9. Attache selon la revendication 8, caractérisée en ce que la partie massive du corps a une section droite en forme de U, en ce que le tampon présente un prolongement traversant le fond du U et ayant un rétrécissement local emprisonné dans le fond et en ce que les pattes élastiques se raccordent aux extrémités des branches du U.

10. Attache selon l'une quelconque des revendications précédentes, caractérisée en ce que le corps est en matière plastique moulée résistant aux températures élevées.

# FIG.3.

# FIG.1.

# FIG.4.

FIG.5.

FIG.2

# FIG.6.

# FIG.7.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-A-1 923 669 (TUFLEX AG) <br> * page 8, ligne 25 - page 9, ligne 31; page 10, lignes 21-27; revendication 1; figures 1,9,13 * <br> --- | 1,10 | F 16 B 37/04 <br> H 02 B 1/04 |
| A | FR-A-1 562 973 (COMPAGNIE ELECTRO-MECANIQUE) <br> * figure 2 * <br> --- | 1 | |
| A | EP-A-0 038 368 (H. HEIDRICH) <br> --- | | |
| A | DE-A-2 946 622 (O. WOERTZ) <br> ----- | | |

**DOMAINES TECHNIQUES RECHERCHES (Int. Cl.5)**

F 16 B
H 02 B

Le présent rapport a été établi pour toutes les revendications

| Lieu de la recherche | Date d'achèvement de la recherche | Examinateur |
|---|---|---|
| BERLIN | 15-09-1989 | SCHAEFFLER C.A.A. |